# EUROPÄISCHE PATENTSCHRIFT

(11) **EP 1 470 629 B1**
(45) Veröffentlichungstag und Bekanntmachung des Hinweises auf die Patenterteilung: **16.11.2011**
(21) Anmeldenummer: 03702478.3
(22) Anmeldetag: 21.01.2003
(51) Int. Cl.: H02K 5/00

(54) **BÜRSTENTRAGEPLATTE UND ELEKTROMOTOR MIT EINER SOLCHEN BÜRSTENTRAGEPLATTE**
BRUSH HOLDING PLATE AND ELECTRIC MOTOR HAVING SUCH A BRUSH HOLDING PLATE
PLAQUE PORTE-BALAIS ET MOTEUR ELECTRIQUE AVEC UNE TELLE PLAQUE PORTE-BALAIS

(30) Priorität: 30.01.2002 DE 10203489
(43) Veröffentlichungstag der Anmeldung: 27.10.2004
(73) Patentinhaber: Valeo Wischersysteme GmbH, 74321 Bietigheim-Bissingen (DE)
(72) Erfinder: KAPITZA, Harald, 71640 Ludwigsburg (DE); WALTHER, Bernd, 74321 Bietigheim-Bissingen (DE)
(74) Vertreter: Vötsch, Reiner
(86) Internationale Anmeldenummer: PCT/EP2003/000542
(87) Internationale Veröffentlichungsnummer: WO 2003/065545

(56) Entgegenhaltungen:
- EP-A- 0 101 546
- DE-A- 3 842 223
- US-A- 5 977 683

## Beschreibung

Die Erfindung betrifft eine Bürstentrageplatte mit Köchern und mit in den Köchern geführten Bürsten, wobei die Führung der Bürsten unter Federbelastung in radialer Richtung auf einen zentralen Durchbruch in der Bürstentrageplatte hin erfolgt.

Dabei sind die Köcher von einer radial äußeren vormontageposition in eine radial innere Endmontageposition verschiebbar auf der Bürstentrageplatte angeordnet und in der äußeren Vormontageposition der Köcher halten Haltemittel die Bürsten in den Köchern und relativ zu den Köchern in einer radial äußeren Position.

Die Erfindung betrifft außerdem einen Elektromotor mit einer derartigen Bürstentrageplatte.

Um die Montage einer derartigen Bürstentrageplatte in einen Elektromotor zu ermöglichen, ist es bekannt, Haltemittel vorzusehen, die die Bürsten in den fest auf der Bürstentrageplatte angeordneten Köchern in einer radial äußeren Position halten.

So ist beispielsweise aus der DE 44 30 954 A1 bekannt, Haltemittel in Form eines Halterings zu verwenden, der in einer Vormontageposition zwischen den Bürsten der Bürstentrageplatte angeordnet ist und die Bürsten in einer radial äußeren Position hält. Beim Einführen des Kommutators wird der Haltering axial verschoben und gibt die Bürsten frei, so dass sie in der Endmontageposition unter Vorspannung gegen den Kommutator wirken.

Aus der DE 33 28 683 C2 ist ferner bekannt, Haltemittel in Form von Haltezungen vorzusehen, die einstückig mit den Köchern ausgebildet sind und in Vertiefungen an den Bürsten derart eingreifen, dass die Bürsten in einer radial äußeren Position gehalten werden.

Bei in Elektromotoren verbauten Bürstetrageplatten liegen die nach radial innen ragenden Kontaktflächen der Bürsten an dem Kommutator des Elektromotors an. Um einen möglichst günstigen Kraftfluss zwischen dem sich drehenden Kommutator und den auf der Bürstentrageplatte angeordneten Köchern zu gewährleisten, ragen die Bürsten nur geringfügig aus den Köchern heraus. Die freien Stirnseiten der jeweiligen Köcher weisen folglich nur einen geringen Abstand zum Kommutator auf. Der Durchbruch in der Bürstentrageplatte ist dabei geringfügig größer als der Durchmesser des Kommutators. Aufgrund dieser geometrischen Einschränkungen ergeben sich Nachteile beim Montieren des Elektromotors. Beispielsweise kann die den Anker und den Kommutator aufweisende Ankerwelle nicht mit Lagerelementen vormontiert werden, deren Durchmesser größer ist als der Durchmesser in der Bürstentrageplatte. Bevor das entsprechende Lagerelement auf die Ankerwelle aufgeschoben wird, ist folglich zuerst die Bürstentrageplatte zu montieren.

Aus der EP-A-0 101 546 ist eine andere Bürstentragplatte bzw. ein Elektromotor mit einer anderen Bürstentragplatte bekannt. Die Köcher, in denen die Schleifbürsten angeordnet und geführt sind, sind von einer radial äußeren Vormontageposition in eine radial innere Endmontageposition verschiebbar auf der Bürstentrageplatte angeordnet. Die Schleifbürsten sind durch Federn in Richtung eines zentralen Durchbruchs der Bürstentragplatte bzw. eines in diesem Durchbruch vorgesehenen Trommelkollektors belastet. In der äußeren Vormontageposition der Köcher halten Haltemittel die Bürsten in den Köchern relativ zu zum zentralen Durchbruchs in einer radial äußeren Position, derart, dass die köcher und die Bürsten nicht über den Rand des zentralen Durchbruchs in dessen Querschnitt hineinragen. Die Haltemittel sind einstückig mit der Bürstentragplatte verbundene Anschlaglappen, die unmittelbar am Rand des zentralen Durchbruchs der Bürstentragplatte ausgebildet sind und in den Verschiebebereich der Bürsten hineinrage. In der Vormontageposition liegen aus den Köchern herausragenden Stirnseiten der Bürsten an die diesen Anschlaglappen an. Nach Montage der Motorwelle mit dem Darauf befindliche Kollektor werden die Köcher und die darin geführten Bürsten nach radial innen in die Endmontageposition verschoben, Dabei werden die Anschlaglappen von der Bürstentragplatte abgebrochen oder so weit verbogen, dass die Bürsten freigegeben werden und in Anlage gegen den Kollektor gelangen. Nachteilig hierbei ist, dass das verschieben der Köcher zum Abbrechen oder verbiegen der Anschlaglappen einen relativ hohen Kraftaufwand erfordert. Ferner können die abgebrochenen Teile der Anschlaglappen in irgendwelche Hohlräume des Motors, im Extremfall zwischen die Bürsten und den Kollektor, gelangen und zu Funktionsstörungen führen. Der vorliegenden Erfindung liegt deshalb die Aufgabe zugrunde, eine bekannte Bürstentrageplatte und einen bekannten Elektromotor mit einer solchen Bürstentragplatte dahingehend weiterzubilden, dass bei der Montage des Elektromotors der Kraftaufwand für das Freigeben der Bürsten verringert ist und montagebedingte Funktionsstörungen des Elektromotors vermieden werden.

Diese Aufgabe wird mit einer Bürstentragplatte gemäß Patentanspruch 1 gelöst.

Die Bürstentrageplatte weist einen zentralen Durchbruch auf. Die Bürstentrageplatte ist ausgestattet mit Köchern und mit in den Köchern geführten Bürsten, wobei die Führung der Bürsten unter Federbelastung in radialer Richtung auf den zentralen Durchbruch in der Bürstentrageplatte hin erfolgt. Die Köcher sind von einer radial äußeren Vormontageposition in eine radial innere Endmontageposition verschiebbar auf der Bürstentrageplatte angeordnet. In der äußeren Vormontageposition der Köcher halten Haltemittel die Bürsten in den Köchern und relativ zu den Köchern in einer radial äußeren Position. Erfindungsgemäß umfassen die Haltemittel mit den Köchern verbundene Federzungen, deren freie Enden in der Vormontageposition an den Bürsten angreifen und diese in der genannten radial äußeren Position halten. Dabei liegen die Federzungen auf der der jeweiligen Bürste abgewandten Seite der Bürstentrageplatte. In der Vormontageposition durchgreifen die freien Enden der Federzungen Aussparungen in der Bürstentrageplatte derartig, dass die Federzungen beim Verschieben der Köcher nach radial innen gegen die Kante der jeweilige Aussparung auflaufen. Beim Auslaufen der Federzungen werden diese aus ihrer die jeweilige Bürste haltenden Lage ausgelenkt, wodurch die Bürste automatisch freigegeben wird und sich nach radial innen bewegt. Der erforderliche Kraftaufwand zum Auslenken der Federzungen ist gering. Außerdem gibt es keine von der Büstentragplatte abgebrochenen oder umgebogenen Teile, welche die Punktion des Elektromotors stören könnten.

Durch Verschieben der Köcher in die radial innere Endmontageposition wird gewährleistet, dass die Kontaktflächen der Bürsten am Kommutator zum Anliegen kommen.

Es ist vorteilhaft, wenn die Köchers und/oder die Bürsten in der Vormontageposition nicht oder nur geringfügig in den in Durchbruchragen. Damit wird gewährleistet, dass die gesamte Querschnittsfläche des Durchbruchs zur Montage der Bürstentrageplatte zur Verfügung steht. In der Vormontageposition kann folglich die Ankerwelle mit dem Kommutator und gegebenenfalls mit dem Lagerelement durch den Durchbruch geführt werden.

Vorteilhaft ist auch, wenn in der Vormontageposition der Köcher die Bürsten aus den Köchern nicht oder nur geringfügig herausragen. Dies hat den Vorteil, dass zur Freigabe des Durchbruchs die Köcher nur so weit radial außen angeordnet sein müssen, dass sie nicht oder nur geringfügig in den Durchbruch ragen. In der Endmontageposition ist durchaus gewollt, dass die Köcher bis fast an den Kommutator in den Durchbruch ragen. Hieraus ergibt sich eine gute seitliche Führung der Bürsten.

Wenn die Haltemittel die Bürsten während des Verschiebens der Köchern in die Endmontageposition oder erst in der Endmontageposition frei geben. Dadurch wird gewehrleistet, dass ein frühzeitiges Freigeben der Haltemittel und damit ein frühzeitiges und ungewolltes Bewegen der Bürsten nach radial innen vermieden wird.

Um nach dem Freigeben der Bürsten ein ungewolltes Bewegen der Köcher zu unterbinden, ist bei einer Ausführungsform der Erfindung vorgesehen, dass die Köcher in der Endmontageposition auf der Bürstentrageplatte festsetzbar, insbesondere mit der Bürstentrageplatte verrastbar oder verklemmbar, ausgebildet sind. Dazu können beispielsweise Rastnasen oder Rasterhebungen an dem Köcher bzw. an den Haltemitteln vorgesehen sein, die Kanten der Bürstentrageplatte hintergreifen bzw. in Aussparungen der Bürstentrageplatte eingreifen.

Die eingangs genannte Aufgabe wird außerdem durch einen Elektromotor gemäß Patentanspruch 3 gelöst.

Zur erleichterten Montage des Elektromotors kann die Erfindung ausgestaltend vorgesehen sein, dass sich die Ankerwelle über ein Lagerelement mit dem Durchmesser a gegen das Gehäuse bzw. ein Lagerschild abstützt, wobei der Durchmesser b des Durchbruchs größer ist als der Durchmesser a des Lagerelements. Das Lagerelement kann auf die Ankerwelle montiert werden und in der Vormontageposition durch den Durchbruch der Bürstentrageplatte geführt werden. Nach dem Durchführen werden die Köcher radial nach innen in die Endmontageposition verschoben, und die Haltemittel geben die Bürsten frei.

Weitere vorteilhafte Ausgestaltungen und Eigenschaften der Erfindung sind der folgenden Beschreibung zu entnehmen, in der die Erfindung anhand des in der Zeichnung dargestellten Ausführungsbeispiels näher beschrieben und erläutert ist. In der Zeichnung zeigen:
- Fig. 1:: eine Seitenansicht wesentlicher Teile eines erfindungsgemäßen Elektromotors in Vormontageposition;
- Fig. 2:: die Draufsicht des Elektromotors gemäß Fig. 1;
- Fig. 3:: den Elektromotor gemäß Fig. 1 in Endmontageposition;
- Fig. 4:: die Draufsicht des Elektromotors gemäß Fig. 3;
- Fig. 5:: einen Querschnitt durch eine erfindungsgemäße Bürstentrageplatte in Vormontageposition; und
- Fig. 6:: den Querschnitt gemäß Fig. 5 in Endmontageposition.

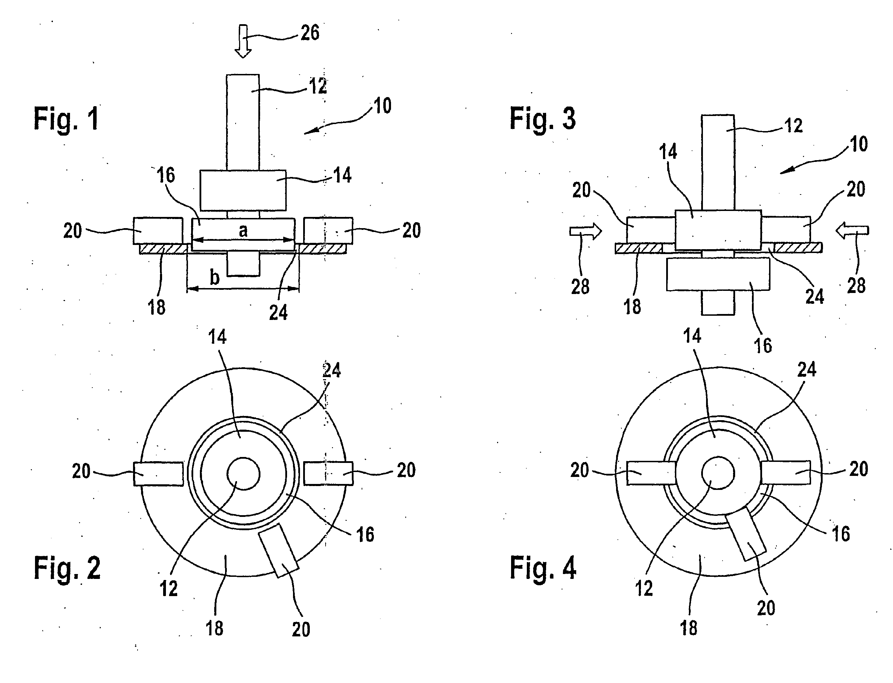

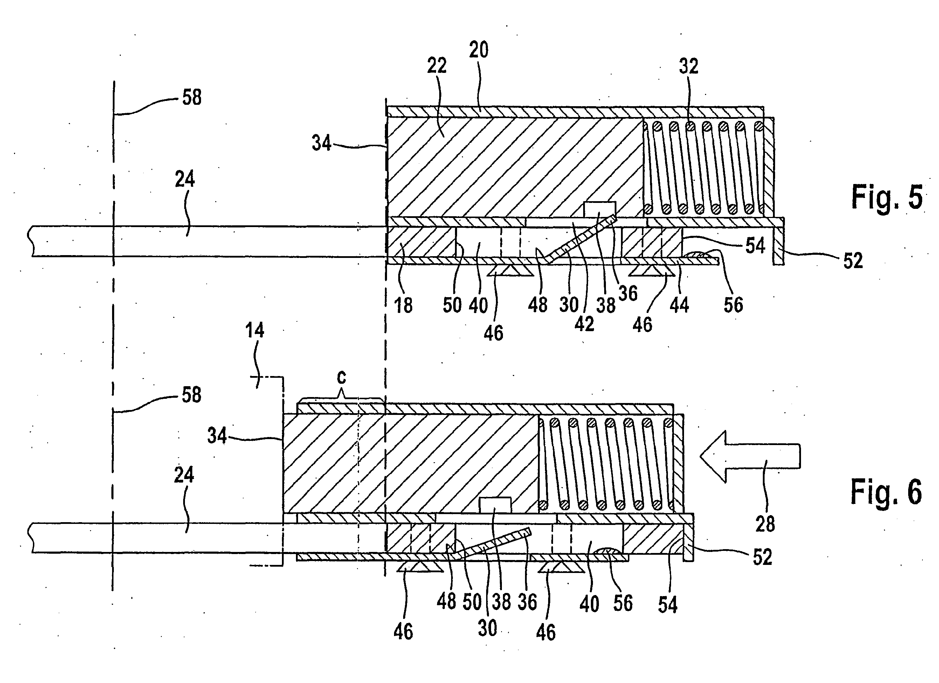

Die Fig. 1 zeigt einen Elektromotor 10 ausschnittsweise, der eine Ankerwelle 12, einen auf der Ankerwelle 12 drehfest angeordneten Kommutator 14 und ein auf der Ankerwelle 12 angeordnetes Lagerelement 16 aufweist. Ferner dargestellt ist eine Bürstentrageplatte 18, auf der insgesamt drei Köcher 20 angeordnet sind. In den Köchern sind in den Fig. 5 und 6 dargestellte Bürsten 22 unter Federbelastung geführt, die in radialer Richtung auf einen zentralen Durchbruch 24 weisen.

Der Durchbruch 24 weist einen Durchmesser b auf, der geringfügig größer ist als der Durchmesser a des Lagerelements 16. Wie aus Fig. 1 und 2 deutlich hervorgeht, ragen die Köcher 20 in der Vormontageposition mit den darin angeordneten Bürsten 22 nicht in den Durchbruch 24. Folglich kann in dieser in den Fig. 1 und 2 dargestellten Vormontageposition die Ankerwelle 12 samt Lagerelement 16 in Richtung des Pfeils 26 durch den Durchbruch 24 hindurchgeführt werden, bis der Kommutator 14 seine Endlage zwischen den Köchern 20 bzw. bis das Lagerelement 16 eine nicht dargestellte gehäuseseitige Lageraufnahme erreicht hat. In einem nächsten Arbeitsschritt werden die radial auf der Bürstentrageplatte 18 verschiebbar angeordneten Köcher 20 aus ihrer in den Fig. 1 und 2 dargestellten radial äußeren Vormontageposition in die in den Fig. 3 und 4 dargestellte radial innere Endmontageposition gemäß den Pfeilen 28 verschoben.

Erfindungsgemäß sind die Bürsten 22 mittels Haltemitteln in einer radial äußeren, zurückgezogenen Position innerhalb der Köcher 20 gehalten. Beim Verschieben der Köcher 20 in die Endmontageposition geben die Haltemittel die Bürsten 22 frei, so dass diese unter Federbelastung in radialer Richtung gegen den Kommutator 14 federbeaufschlagt angeordnet sind.

Aus Fig. 3 und 4 wird ferner deutlich, dass in der Endmontageposition die Köcher 20 in den Durchbruch 24 ragen und dass die Stirnseiten der Köcher 20 nahe an den Kommutator 14 reichen. Dies hat den Vorteil, dass die Bürsten, die den Kommutator 14 kontaktieren, von den Köchern so weit als möglich seitlich abgestützt werden. Damit wird einem Verkeilen der Bürsten 22 in den Köchern 20 entgegengewirkt.

In der Fig. 5, die einen Längsschnitt durch die Bürstentrageplatte 18 und einen Köcher 20 zeigt, ist der Köcher 20 in der radial äußeren Vormontageposition dargestellt. In dem Köcher 20 ist die Bürste 22 über ein Haltemittel in Form einer Federzunge 30 in einer radial äußeren Position gegen die Federkraft einer Schraubenfeder 32 gehalten. In dieser Position ragt die Kontaktfläche 34 der Bürste 22 nicht aus dem Köcher 20 heraus. Das freie Ende 36 der Federzunge 30 ragt dabei durch eine Aussparung 40 der Bürstentrageplatte 18 und eine Aussparung 42 an der Grundseite des Köchers 20 in eine Halteaussparung 38 an der Bürste 22. Die Federzunge 30 ist Bestandteil eines auf der dem Köcher 20 abgewandten Seite der Bürstentrageplatte 18 angeordneten Federblechs 44, das über Verbindungsstifte 46 mit der Grundseite des Köchers 20 verbunden ist.

Nachdem der in der Fig. 6 angedeutete Kommutator 14 zwischen die Köcher 20 eingeführt ist, wird der Köcher 20 samt Federblech 44 und Federzunge 30 in Richtung des Pfeiles 28 in die Endmontageposition verschoben. Kurz vor Erreichen der Endmontageposition läuft der dem Federblech 44 zugewandte Bereich 48 der Federzunge 30 gegen die Innenkante 50 der Aussparung 40, wodurch das freie Ende 36 der Federzunge 30 in Richtung des Federblechs 44 bewegt wird und die Bürste 22 freigegeben wird. Aufgrund der Federkraft der Schraubenfeder 32 wird die Bürste 22 nach radial innen gedrückt und beaufschlagt mit ihrer Kontaktfläche 34 den Kommutator 14. Die Längsachse des Durchbruchs 24 trägt das Bezugszeichen 58.

Um eine definierte Endmontagestellung zu erreichen, weist der Köcher 20 eine Anschlagkante 52 auf, die in der Endmontageposition gegen die äußere Schmalseite 54 der Bürstentrageplatte 18 stößt.

Um den Köcher 20 zum einen in der Vormontageposition gemäß Fig. 5 und zum anderen in der Endmontageposition gemäß Fig. 6 gegen ein ungewolltes Verschieben zu sichern, weist das Federblech 44 auf seiner dem Köcher 20 zugewandten Seite eine Rasterhebung 56 auf. In der Vormontageposition gemäß Fig. 5 befindet sich die Rasterhebung 56 weiter radial außen als die Schmalseite 54 der Bürstentrageplatte 18. Wird der Köcher 20 nach radial innen verschoben, so gelangt die Rasterhebung 56 unter elastischer Verformung des Federblechs 44 unterhalb die Schmalseite 54 bzw. unterhalb die Bürstentrageplatte 18. Zum Verschieben der Köcher 20 ist folglich ein entsprechender Kraftaufwand erforderlich. Ein selbsttätiges Verschieben der Köcher 20 aus der Vormontageposition in die Endmontageposition wird damit ausgeschlossen. Bei Erreichen der Endmontageposition rastet dann die Rasterhebung 56 aufgrund der Elastizität des Federblechs 44 in die Aussparung 40 der Bürstentrageplatte 24 ein. Ein selbsttätiges Verschieben des Köchers 20 nach radial außen wird damit unterbunden.

Die Differenz, um die der Köcher 20 von der Vormontageposition gemäß Fig. 5 in die Endmontageposition gemäß Fig. 6 verschoben wurde, ist in Fig. 6 mit dem Buchstaben c gekennzeichnet.

## Patentansprüche

1. Bürstentrageplatte (18) mit Köchern (20) und mit in den Köcher (20) geführten Bürsten (22), wobei die Führung der Bürsten (22) unter Federbelastung in radialer Richtung auf einen zentralen Durchbruch (24) in der Bürstentrageplatte (18) hin erfolgt, wobei die Köcher (20) von einer radial äußeren Vormontageposition, in eine radial innere Endmontageposition verschiebbar auf der Bürstentrageplatte (18) angeordnet sind und in der Vormontageposition Haltemittel (30) die Bürsten (22) in den Köchern (20) und relativ zu den Köchern (20) in einer radial äußeren Position halten, **dadurch gekennzeichnet, dass** die Haltemittel mit den Köchern verbundene Federzungen (30) umfassen, deren freie Enden (36) in der Vormontageposition an den Bürsten (22, 38) angreifen, dass die Federzungen (30) auf der der jeweiligen Bürste (22) abgewandten Seite der Bürstentrageplatte (18) liegen, wobei die freien Enden (36) der Federzungen (30) in der Vormontageposition Aussparungen (40) in der Bürstentrageplatte (18) durchgreifen, und dass die Federzungen (30) beim Verschieben der Köcher (20) nach radial innen gegen den die jeweilige Aussparung (40) umgebenden Bereich (50) auflaufen und die jeweilige Bürste (22) freigeben.

2. Bürstentrageplatte (18) nach Anspruch 1, **dadurch gekennzeichnet, dass** die Köcher (20) in der Endmontageposition auf der Bürstentrageplatte (18) festsetzbar, insbesondere mit der Bürstentrageplatte (18) verrastbar oder verklemmbar (56), ausgebildet sind.

3. Elektromotor (10) mit einem Gehäuse, mit einer ; Ankerwelle (12), mit einem auf der Ankerwelle (12) angeordneten Kommutator (14) und mit einer Bürstentrageplatte (18) gemäß Anspruch 1 , wobei in der Endmontageposition die Kontaktflächen (34) der Bürsten (22) unter Federbelastung gegen den Kommutator (14) wirken_{.}

4. Elektromotor (10) nach Anspruch 3, **dadurch gekennzeichnet, dass** die Köcher (20) in der Endmontageposition auf der Bürstentrageplatte (18) festsetzbar, insbesondere mit der Bürstentrageplatte (18) verrastbar oder verklemmbar (56), ausgebildet sind.

5. Elektromotor (10) nach Anspruch 3 oder 4, **dadurch gekennzeichnet, dass** sich die Ankerwelle (12) über ein Lagerelement (16) mit dem Durchmesser a gegen das Gehäuse bzw. ein Lagerschild abstützt, wobei der Durchmesser b des Durchbruchs (24) größer ist als der Durchmesser a des Lagerelements (16).

## Claims

1. Brush holder plate (18) having receptacles (20) and brushes (22) guided in the receptacles (20), wherein guiding of the brushes (22) is performed under spring loading in the radial direction on a central opening (24) in the brush holder plate (18), wherein the receptacles (20) are arranged displaceable on the brush holder plate (18) from a radially outer preassembly position into a radially inner final assembly position and in the preassembly position, retention means (30) hold the brushes (22) in the receptacles (20) in a radially outer position in relation to the receptacles (20), **characterised in that** the retention means comprise, connected to the receptacles, spring tongues (30), the free ends (36) of which engage in the preassembly position on the brushes (22, 38), the spring tongues (33) lie on the side of the brush holder plate (18) facing away from the respective brush (22), wherein the free ends (36) of the spring tongues (30) reach through recesses (40) in the brush holder plate (18) in the preassembly position and the spring tongues (30) on displacement of the receptacles (20) collide in the radially inwards direction against the area (50) surrounding the respective receptacle (40) and release the respective brush (22).

2. Brush holder plate (18) according to claim 1, **characterised in that** the receptacles (20) are designed to be securable in the final assembly position on the brush holder plate (18), in particular lockable or clampable (56) to the brush holder plate (18).

3. Electric motor (10) with a housing having an armature shaft (12), with a commutator (14) arranged on the armature shaft (12) and with a brush holder plate (18) according to claim 1, wherein the contact surfaces (34) of the brushes (22) in the final assembly position act under spring loading against the commutator (14).

4. Electric motor according to claim 3, **characterised in that** the receptacles (20) are designed to be securable in the final assembly position on the brush holder plate (18), in particular lockable or clampable (56) to the brush holder plate (18).

5. Electric motor (10) according to claim 3 or 4, **characterised in that** the armature shaft (12) rests by means of a bearing element (16) with diameter a against the housing and a bearing shield, wherein diameter b of the opening (24) is greater than the diameter a of the bearing element (16).

## Revendications

1. Plaque porte-balais (18), comportant des porte-balais (20) et des balais (22) logés dans les porte-balais (20), les balais (22) étant guidés moyennant la sollicitation d'un ressort dans la direction radiale vers un passage (24) central dans la plaque porte-balais (18), les porte-balais (20) étant disposés sur la plaque porte-balais (18) de manière mobile en translation depuis une position de montage préliminaire radialement extérieure dans une position de montage final radialement intérieure, et sachant que, dans la position de montage préliminaire, des moyens de fixation (30) maintiennent les balais (22) dans les porte-balais (20) et dans une position radialement extérieure par rapport aux porte-balais (20), **caractérisée en ce que** les moyens de fixation comprennent des pattes flexibles (30), qui sont reliées aux porte-balais et dont les extrémités libres (36), dans la position de montage préliminaire, s'appliquent sur les balais (22, 38), **en ce que** les pattes flexibles (30) sont situées sur le côté de la plaque porte-balais (18), détourné du balai (22) respectif, les extrémités libres (36) des pattes flexibles (30) traversant, dans la position de montage préliminaire, des évidements (40) ménagés dans la plaque porte-balais (18), et **en ce que** les pattes flexibles (30), lors du mouvement de translation des porte-balais (20), viennent se poser radialement vers l'intérieur contre la zone (50) entourant l'évidement (40) respectif et libère le balai (22) respectif.

2. Plaque porte-balais (18) selon la revendication 1, **caractérisée en ce que** les porte-balais (20) sont réalisés de manière apte à être fixés sur la plaque porte-balais (18) dans la position de montage final, en particulier de manière apte à être encliquetés ou bloqués (56) avec la plaque porte-balais (18).

3. Moteur électrique (10), comportant un carter, un arbre d'induit (22), un commutateur (14) disposé sur l'arbre d'induit (22), et une plaque porte-balais (18) selon la revendication 1, sachant que, dans la position de montage final, les surfaces de contact (34) des balais (22) agissent contre le commutateur (14) moyennant la sollicitation d'un ressort.

4. Moteur électrique (10) selon la revendication 3, **caractérisé en ce que** les porte-balais (20), dans la position de montage final, sont réalisés de manière apte à être fixés sur la plaque porte-balais (18), en particulier de manière apte à être encliquetés ou bloqués (56) avec la plaque porte-balais (18).

5. Moteur électrique (10) selon la revendication 3 ou 4, **caractérisé en ce que** l'arbre d'induit (12) prend appui sur le carter ou une lame d'appui par l'intermédiaire d'un élément d'appui (16) avec le diamètre a, sachant que le diamètre b du passage (24) est supérieur au diamètre a de l'élément d'appui (16).
